# EUROPEAN PATENT SPECIFICATION

(11) **EP 4 098 912 B1**
(45) Date of publication and mention of the grant of the patent: **08.10.2025**
(21) Application number: 22180379.4
(22) Date of filing: 12.07.2018
(51) Int. Cl.: F16K 3/32, F24D 3/00, F24D 19/10, G05D 7/01, F24D 3/10, F16K 7/18

(54) **CONTROL VALVE FOR HEATING AND/OR COOLING SYSTEM MANIFOLD AND FLOOR HEATING SYSTEM**
REGELVENTIL FÜR HEIZ- UND/ODER KÜHLSYSTEMVERTEILER UND FUSSBODENHEIZSYSTEM
SOUPAPE DE COMMANDE DE COLLECTEUR DE SYSTÈME DE CHAUFFAGE ET/OU DE REFROIDISSEMENT ET SYSTÈME DE CHAUFFAGE DE SOL

(30) Priority: 14.08.2017 DK PA201770613; 14.08.2017 DK PA201770612
(43) Date of publication of application: 07.12.2022
(62) Divisional of application: 18846065.3
(73) Proprietor: Flowcon International ApS, 4200 Slagelse (DK)
(72) Inventor: IBSEN, Bjarne Wittendorff, 4220 Korsør (DK); MØLLER, Carsten Enøe, 4200 Slagelse (DK)
(74) Representative: Nordic Patent Service A/S

(56) References cited:
- EP-A1- 0 789 821
- EP-A1- 2 557 365
- US-A1- 2015 198 258

## Description

### TECHNICAL FIELD

The invention relates to control valves that includes a differential pressure control function, for control of fluid in a heating and/or cooling installation of e.g. a building, a ship or a plant. The invention also relates to a manifold with control valves for a heating and/or cooling installation of a building, ship or plant.

### BACKGROUND

Buildings are provided with heating and/or cooling systems (HVAC) that include a plurality of individual circuits that each require a flow of heating or cooling liquid through the individual circuit concerned. An individual circuit can be a loop in a floor heating system that covers a particular area, a loop in a sealing cooling system that covers a particular area, a loop including one or more space heating radiators and combinations thereof. Even for relatively small buildings such as domestic housing the number of individual circuits is normally more than five and often more in the region of ten individual circuits. In order to ensure good climatization and efficient use of energy it is required that the circuits are well balanced, i.e. it is avoided that certain individual circuits receive too much flow path others received too little flow. The cooling or heating liquid, typically water needs to be distributed through the heating system in a predetermined calculated way that takes into account the characteristics of each individual circuit. To balance such a heating and/or cooling system in accordance with the predetermined distribution, a flow control valve is placed in the return line of each individual circuit. Often, a plurality of flow control valves is arranged in a manifold for ease of installation and maintenance, e.g. all the return lines of the floor heating system of a particular floor in the house are connected to a single manifold comprising flow control valve for each return line. The flow control valves can be provided with electrically operated actuators that can open and close the flow control valve associated therewith.

WO2011006559 discloses a manifold with a pre-adjustable flow-rate controller for heating systems, comprising a housing, which has a heating medium feed connection, a heating medium drain connection, and a pre-adjustment connection, and comprising a rate regulating insert, which changes the flow cross-section for the heating medium depending on the pressure in the rate regulating insert. In this manifold the flow rate is not independent of the pressure differential and this manifold does not provide the accuracy required for contemporary high efficiency flooring systems.

EP2557365 discloses a manifold according to the preamble of claim 13.Consequently, there is a need for a floor heating system and a manifold for such a floor heating system that overcomes or at least reduces the problems indicated above.

The above-mentioned type of control valve is used for hydraulic balancing in a system that comprises a large number of individual heating circuits. These control valves are used to control the flow of heating or cooling fluids through individual circuits in the system, and thus ensure that each individual heating circuit is provided with a desired flow of heating or cooling liquid so that the whole system is balanced. An individual heating circuit can be a section of a floor heating, of a ceiling cooling system, a space heating radiator or a group of several space heating radiators. This type of control valve is provided with a differential pressure control function that includes a movable throttling element that is affected on one side by a first pressure P1 and on the other side by second pressure P2 and a resilient force, for example from a helical spring. The second pressure P2 is lower than the first pressure P1 and the characteristics of the resilient force determine the pressure differential that is maintained. Thus, a stiffer spring results in a higher differential pressure. Such a differential pressure control function is e.g. used to maintain a constant differential pressure over an adjustable size opening. With a constant differential pressure over the adjustable size opening the flow can be accurately regulated by adjusting the adjustable size opening. The adjustable size opening can be manually adjusted or be adjusted using an actuator, such as an electric actuator. The adjustment can be automatic by an electronic control unit or be in response to a control signal. Typically, adjustment is manual, and the control valves are arranged in the return line. However, there are other ways to use a differential pressure function in a control valve that do not relate to an adjustable size opening.

EP0789821 (WO95/12082) discloses a valve according to the preamble of claim 1.

WO2008052553 discloses a control valve with a rolling membrane as the throttling member and the resilient force comes from a helical spring acting on the rolling membrane. The first higher pressure P1 and the second low pressure P2 originate both on one of the same side of the rolling membrane. Therefore, a pressure communication channel is provided in a central shaft that extends through the rolling membrane for communicating the first high pressure P1 to the opposite side of the rolling membrane. The central shaft extends through a collar in a central opening in the rolling membrane. The collar fits slidingly over the central shaft since the rolling membrane must be allowed to move freely in response to the first pressures P1 on its one side and the second pressure P2 and the helical spring on its other side. The rolling membrane must therefore be free move relative to the central shaft. A small clearance is needed between the collar and the central shaft to ensure free movement of the rolling membrane. However, such a clearance will always form a leak path and consequently, it is not possible to avoid small amount of leakage even if the valve of WO2008052553 is in its fully closed position. Though small, such leakage may over time accrue and form a substantial energy loss for the system in which is used.

US 2015/0198258 discloses a control valve for controlling flow of liquid in a heating and/or cooling installation, the control valve comprising: a pressure regulating arrangement configured for maintaining a substantially constant differential pressure between a first pressure (P1) in the control valve and a second pressure (P2) in the control valve, the pressure regulating arrangement comprises a movable throttle member that is urged by the first pressure (PI) to increase the flow resistance posed by the pressure regulating arrangement and that is urged by a resilient member and by the second pressure (P2) to decrease the flow resistance posed by the pressure regulating arrangement, the movable throttle member comprising a rolling diaphragm that interacts with a plurality of exit openings, the rolling diaphragm having a circular circumference attached to an annular body that is arranged in the control valve, the plurality of exit openings being formed radially through the annular body, having a pressure communication channel that communicates the pressure P1 at the inlet to the bottom end of the valve housing. This enables an actuator to close off the valve completely, so that no leak can occur between the inlet and the outlet. However, this solution only applies to the situation where the valve is completely closed, and leak across the membrane still occurs when the valve is not completely closed.

Consequently, there is a need for a control valve that overcomes or at least reduces the problems indicated above.

### SUMMARY

The foregoing and other objects are achieved by the features of the independent claims. Further implementation forms are apparent from the dependent claims, the description and the figures.

According to a first aspect, there is provided a control valve for controlling flow of liquid in a heating and/or cooling installation, the control valve comprising an elongated, preferably rotation symmetric, valve body with opposite first- and second longitudinal ends, the first longitudinal end being provided with an inlet opening, a pressure regulating arrangement configured for maintaining a substantially constant differential pressure between a first pressure P1 in the control valve and a second pressure P2 in the control valve, the pressure regulating arrangement comprises a movable throttle member that is urged by the first pressure P1 to increase the flow resistance posed by the pressure regulating arrangement and that is urged by a resilient member and by the second pressure P2 to decrease the flow resistance posed by the pressure regulating arrangement, the movable throttle member comprising a rolling diaphragm that interacts with a plurality of exit openings, the rolling diaphragm having its outer circular circumference attached to an annular body, the plurality of exit openings being formed radially through the annular body, the annular body being slidably disposed in a cylindrical portion of the valve housing for allowing axial movement and rotational movement of the annular body relative to the elongated valve body.

By providing a control valve in which the differential pressure regulation function is included in a separate body that can move axially and rotationally relative to the valve body, it is possible to provide a differential control valve with improved possibilities for controlling flow and reducing leakage.

According to a possible implementation of the first aspect the annular body fits sealingly inside the cylindrical portion.

In a possible implementation of the first aspect the control valve comprises a closing member arranged to move axially in unison with the annular body, the closing member being configured to sealingly close the inlet opening in a first axial portion of the annular body and to allow fluid passage through the inlet opening in a second axial position of the annular body.

According to a possible implementation of the first aspect the closing member comprises a cylindrical part extending axially from the annular body towards the inlet opening.

According to a possible implementation of the first aspect the annular body has two opposite axial ends, wherein the axial end of the annular body closest to inlet opening comprises a disk-shaped element provided with at least one first regulation opening.

According to a possible implementation of the first aspect the disk-shaped element forms a bottom of the annular body.

According to a possible implementation of the first aspect the control valve comprises a plate member with at least one second regulation opening for interacting with the first regulation opening, one side of the plate member being in contact with the side of the disk shaped element closest to the inlet opening, the plate member, being arranged to move axially in unison with the annular body and the plate member being rotationally immovable relative to the cylindrical portion of the valve body, whereby a greater or smaller overlap may be established between the at least one first regulation opening and the at least one second regulation opening by the rotation of the annular body relative to the valve body.

According to a possible implementation of the first aspect the cylindrical portion is connected to the plate member.

According to a possible implementation of the first aspect the control valve comprises a membrane support member for supporting and engaging a central portion of the rolling membrane, and a helical spring, the helical spring acting on the support member to urge the rolling membrane in a direction that reduces the throttling effect of the rolling membrane.

According to a possible implementation of the first aspect the control valve comprises a mechanism connected to the annular body for adjusting the rotational position of the annular body relative to the valve body, the mechanism being configured for adjusting the rotational position manually or with an actuator.

According to a possible implementation of the first aspect the control valve comprises a mechanism connected to the annular body for adjusting the axial position of the annular body relative to the valve housing, the mechanism being configured for adjusting the axial position manually or with an actuator.

According to a possible implementation of the first aspect the annular body comprises least one pressure communication channel extending in the annular body for communicating the first pressure P1 from a first location in the control valve on one axial side of the rolling diaphragm to a second location in the control valve on the other axial side of the rolling diaphragm.

According to a second aspect, there is provided a manifold for a for heating system with a plurality of circuits, the manifold comprising an elongated tubular housing, the tubular housing being provided with: a manifold outlet, a plurality of sockets for connection to respective return lines of circuits of the floor heating system, the sockets having a lumen and being arranged to extend into the manifold through a wall of the tubular housing, and a plurality of flow control valves, each flow control valve being associated with one of the sockets, the flow control valves comprising: an elongated valve body, the elongated valve body having first longitudinal end that extends into the manifold for sealingly engaging one of the sockets and a second longitudinal end that extends outside the manifold for coupling to an actuator, an inlet in fluidic connection with the socket associated with the flow control valve concerned, and at least one outlet in fluidic connection with the manifold outlet, and a pressure regulating arrangement in the elongated valve body, the pressure regulating arrangement being configured for maintaining a substantially constant differential pressure between a third pressure in the control valve and a fourth pressure in the control valve.

By providing a floor heating manifold with a plurality of constant differential pressure control valves in the pressure drop across an adjustable opening in such valves can be controlled accurately and thus, the flow setting becomes directly correlated to the size of the adjustable opening and thus, the flow can be controlled more accurately. According to a possible implementation of the second aspect the control valve is provided with an inlet opening at the fourth axial end, the inlet opening being in fluidic communication with a lumen in the socket.

According to a possible implementation of the second aspect the control valve is provided with at least one outlet opening that is in fluidic communication with the interior of the tubular housing.

According to a possible implementation of the second aspect the manifold further comprises a flow area regulator for regulating a flow area of at least one variable size entry opening through which the liquid flowing through the control valve from the inlet opening to the outlet opening must pass.

According to a possible implementation of the second aspect the arrangement for maintaining a constant differential pressure maintains a constant differential pressure over the adjustable size opening.

According to a possible implementation of the second aspect a portion of the control valve projects through an opening in the tubular body opposite to a socket.

According to a possible implementation of the second aspect a portion of a socket projects through an opening in the tubular body.

According to a possible implementation of the second aspect the third end of the valve body is threadedly coupled to the socket.

According to a possible implementation of the second aspect the fourth longitudinal end protrudes from the tubular body, the fourth longitudinal end preferably being provided with coupling means for coupling to an actuator, preferably a linear actuator.

According to a possible implementation of the second aspect the manifold comprises a linear actuator coupled to each control valve.

According to a third aspect there is provided a floor heating system comprising a manifold according to the third aspect or any possible implementation thereof, the manifold being connected to the return end of a plurality of individual floor heating circuits.

According to a possible implementation of the third aspect the floor heating system comprises a feed conduit and a return conduit, the outlet of the manifold being connected to the return conduit and the inlet ends of the plurality of individual floor heating circuits being connected to a fourth manifold, an inlet of the fourth manifold being connected to the feed conduit.

According to a possible implementation of the second or third aspect the control valve comprises a pressure regulating arrangement configured for maintaining a substantially constant differential pressure between a third pressure P1 in the control valve and a fourth pressure P2 in the control valve, the pressure regulating arrangement comprises a movable throttle member that is urged by the third pressure to increase the flow resistance posed by the pressure regulating arrangement and that is urged by a resilient member and by the fourth pressure P2 to decrease the flow resistance posed by the pressure regulating arrangement, the movable throttle member comprising a rolling diaphragm that interacts with a plurality of exit openings, the rolling diaphragm having a circular circumference attached to an annular body that is arranged in the control valve, the plurality of exit openings being formed radially through the annular body, characterized by at least one pressure communication channel extending in the annular body for communicating the third pressure P1 from a third location in the control valve on one axial side of the rolling diaphragm to a fourth location in the control valve on the other axial side of the rolling diaphragm.

In a possible implementation of the second or third aspect the pressure communication channel opens to two axially spaced openings in the annular body.

In a possible implementation of the second or third aspect the exit openings 18 are axially extending elongated openings, and wherein the pressure communication channel axially extends between two axially extending exit openings.

In a possible implementation of the second and third aspect the control valve comprises a plurality of pressure communication channels, each pressure communication channel of the plurality extending between two axially extending exit openings.

In a possible implementation of the second or third aspect the plurality of exit openings is circumferentially distributed over the circumference of the annular body.

In a possible implementation of the second or third aspect the rolling diaphragm comprises a continuous body of material.

In a possible implementation of the second or third aspect the rolling diaphragm does not have any through going openings.

In a possible implementation of the second or third aspect the control valve further comprises a flow area regulator for regulating a flow area of at least one variable size entry opening through which the liquid flowing through the control valve from an inlet opening to an outlet opening must pass.

In a possible implementation of the second or third aspect the control valve comprises an elongated, preferably rotation symmetric, valve body with opposite third and fourth longitudinal ends, the third end being provided with a with a closable inlet opening.

In a possible implementation of the second or third aspect control valve comprising an elongated, preferably rotation symmetric, valve body with opposite third- and fourth longitudinal ends, the third longitudinal end being provided with an inlet opening, a pressure regulating arrangement configured for maintaining a substantially constant differential pressure between a third pressure P1 in the control valve and a fourth pressure P2 in the control valve, the pressure regulating arrangement comprises a movable throttle member that is urged by the third pressure P1 to increase the flow resistance posed by the pressure regulating arrangement and that is urged by a resilient member and by the fourth pressure P2 to decrease the flow resistance posed by the pressure regulating arrangement, the movable throttle member comprising a rolling diaphragm that interacts with a plurality of exit openings, the rolling diaphragm having a circular circumference attached to an annular body, the plurality of exit openings being formed radially through the annular body, the annular body being slidably disposed in a cylindrical portion of the valve housing for allowing axial movement and rotational movement of the annular body relative to the valve housing.

According to a possible implementation of the second or third aspect the annular body fits sealingly inside the cylindrical portion.

In a possible implementation of the second or third aspect the control valve comprises a closing member movable arranged to move axially in unison with the annular body, the closing member being configured to sealingly close the inlet opening in a third axial portion of the annular body and to allow fluid passage through the inlet opening in a fourth axial position of the annular body.

According to a possible implementation of the second or third aspect the closing member comprises a cylindrical part extending axially from the annular body towards the inlet opening.

According to a possible implementation of the second or third aspect the annular body has two opposite axial ends, wherein the axial end of the annular body closest to inlet opening comprises a disk-shaped element provided with at least one third regulation opening.

According to a possible implementation of the second or third aspect the disk-shaped element forms a bottom of the annular body.

According to a possible implementation of the second or third aspect the control valve comprises a plate member with at least one fourth regulation opening for interacting with the third regulation opening, one side of the plate member being in contact with the side of the disk shaped element closest to the inlet opening, the plate member, being arranged to move axially in unison with the annular body and the plate member being rotationally immovable relative to the cylindrical portion of the valve body, whereby a greater or smaller overlap may be established between the at least one third regulation opening and the at least one fourth regulation opening by the rotation of the annular body relative to the valve body.

According to a possible implementation of the second or third aspect the cylindrical portion is connected to the plate member.

According to a possible implementation of the second or third aspect the control valve comprises a membrane support member for supporting and engaging a central portion of the rolling membrane, and a helical spring, the helical spring acting on the support member to urge the rolling membrane in a direction that reduces the throttling effect of the rolling membrane.

According to a possible implementation of the second or third aspect the control valve comprises a mechanism connected to the annular body for adjusting the rotational position of the annular body relative to the valve body, the mechanism being configured for adjusting the rotational position manually or with an actuator.

According to a possible implementation of the second or third aspect the control valve comprises a mechanism connected to the annular body for adjusting the axial position of the annular body relative to the valve housing, the mechanism being configured for adjusting the axial position manually or with an actuator.

According to a possible implementation of the second or third aspect the annular body comprises least one pressure communication channel extending in the annular body for communicating the third pressure P1 from a third location in the control valve on one axial side of the rolling diaphragm to a fourth location in the control valve on the other axial side of the rolling diaphragm.

These and other aspects will be apparent from and the embodiment(s) described below.

### BRIEF DESCRIPTION OF THE DRAWINGS

In the following detailed portion of the present invention, the aspects, embodiments and implementations will be explained in more detail with reference to the example embodiments shown in the drawings, in which:
Figs. 1 and 2 are different side views of a control valve,
Figs 3,4 and 6 are longitudinal-sectional views of the control valve of Figs. 1 and 2,
Fig. 5 is a cross-sectional view of the control valve of Figs. 1 and 2,
Fig. 7 is a longitudinal-sectional view of a functional element of Figs. 1 and 2, the functional element including a constant pressure differential function and a flow area adjustment function,
Fig. 8 is an enlarged detail of Fig. 7,
Fig. 9 is an exploded view of the valve of Figs. 1 and 2,
Fig. 10 is an enlarged longitudinal-sectional view of the valve of Figs. 1 and 2 in an open position, but with internal thread instead of external threat for coupling an actuator to the control valve,
Fig. 11 is an enlarged longitudinal-sectional view of the valve of Fig. 10 in a closed position,
Figs. 12 and 13 show a plurality of control valves in a manifold of a floor heating or ceiling cooling system,
Figs. 14 and 15 show the manifold and control valves of Figs. 12 and 13 in cross-sectional and longitudinal-sectional view, respectively,
Fig. 16 is a longitudinal-sectional view of another embodiment of the functional element of Fig. 7,
Fig. 17 is a top view of the functional element of Fig. 16,
Fig. 18 is an exploded elevated view including an enlarged section of the inner components of the functional element of Fig. 16,
Fig. 19 is an exploded side view of the inner components of the functional element of Fig. 16,
Fig. 20 is a longitudinal-sectional view of another embodiment of the functional element of Fig. 7,
Fig. 21 is a top view of the functional element of Fig. 20,
Fig. 22 it is an exploded elevated view including an enlarged section of the inner components of the functional element of Fig. 20,
Fig. 23 is an exploded side view of the inner components of the functional element of Fig. 16.
Figs. 24 and 25 are cross-and longitudinal-sectional views of another manifold for a floor heating system with a control valve, and
Fig. 26 is a diagrammatic representation of a floor heating system with a manifold control valves including the actuators associated with the control valves.

### DETAILED DESCRIPTION

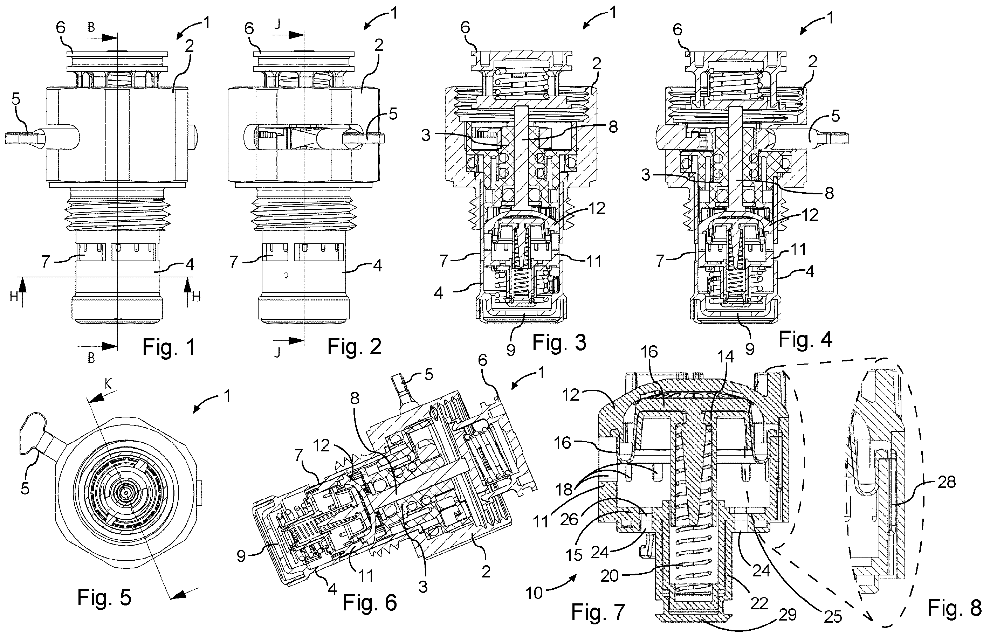

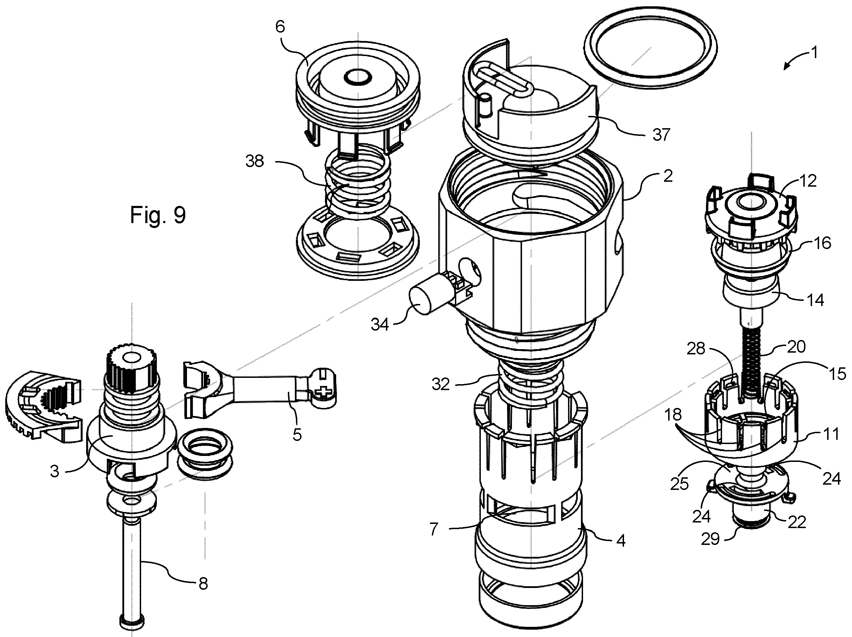

A control valve is described with reference to Figs. 1 to 15. The control valve 1 comprises a valve body 2. The valve body 2 is generally rotation symmetric and comprises a part with a hexagonal outer contour and a cylindrical part 4. It should though be noted that the part with the hexagonal order does not need to have a hexagonal outer shape, the skilled person is familiar with other suitable shapes, such as e.g. a simple cylindrical shape.

The valve body 2 is at or near one of its longitudinal ends provided with thread for coupling with a linear actuator provided with corresponding thread, such as an electric actuator (not shown). The valve body 2 is also provided with thread for engaging thread of a housing or body, such as a manifold 40. Both the cylindrical part 4 and the part with the hexagonal outer have a hollow interior in which most of the components of the control valve 1 are arranged.

An axially movable activator 6 protrudes from the longitudinal end of the valve body 2 where the thread for coupling to an actuator is provided. The activator 6 protrudes from the valve body 2 for engaging an actuator (not shown). The activator 6 is arranged in to parts with a helical spring 38 therebetween in order to avoid application of excessive force to the components in control valve 1 by an actuator.

The opposite longitudinal end is part of the cylindrical part 4. The opposite longitudinal end is provided with an axial inlet opening 9. The cylindrical part 4 is provided with one or more radial outlet openings 7. The control valve 1 controls the flow from the axial inlet opening 9 to the radial outlet opening(s) 7.

Hereto, the control valve 1 comprises an arrangement for maintaining a constant differential pressure and an arrangement for adjusting the size of an adjustable size opening. In an embodiment the arrangement for maintaining the constant differential pressure maintains a constant differential pressure over the adjustable size opening.

An annular body 11 is disposed slidably inside the cylindrical portion 4 of the valve body 2, such that the annular body can rotate relative to the valve body 2 and move in the axial direction relative to the valve body 2. The fit between the annular body 11 and the cylindrical portion 4 is such that it is substantially sealing.

The differential pressure control function comprises a throttling member in the form of a rolling diaphragm 16. The rolling diaphragm 16 has a circular outer circumference that is secured to the annular body 11. The rolling diaphragm is supported by a diaphragm support member 14. A helical spring 20 acts on the diaphragm support member 14 and urges the rolling diaphragm 16 in a direction that reduces the throttling effect of the rolling diaphragm 16.

The annular body 11 is provided with a plurality of exit openings 18. The exit openings 18 extend radially through the annular body 11. The exit openings 18 can be formed as longitudinal slits that extend axially. The exit openings 18 are preferably circumferentially evenly distributed over the annular body 11.

The axial end of the annular body 11 closest to the axial inlet opening 9 is closed off by a bottom in the form of a disc member 15. The disc member 15 is provided with one or more first regulation openings 26.

The axial end of the annular body 11 furthest from the axial inlet opening is provided with a cover 12. The cover 12 is provided with a number of through going openings for pressure equalization.

The bottom with the disc member 15 is rigidly connected to annular body 11 and can be formed as an integral part of the annular body 11. The cover 12 is rigidly connected to the annular body 11.

A central cylindrical portion extends from the disc member 15 and is in an embodiment and integral part of the annular body 11. The central cylindrical portion serves as a shaft for a cylindrical part 22. The cylindrical part 22 moves axially in unison with the annular body 11 and is rotatably suspended from the annular body 11. The cylindrical part 22 is provided with a closing member 29. The closing member 29 is configured to be able sealingly close the axial inlet opening 9. Hereto, the closing member 29 is advantageously the provided with an O-ring. The closing member 29 essentially consists of a cylindrical body that sealingly fits in the circular outline of the axial inlet opening 9.

The cylindrical part 22 can move axially relative to the valve body 2. However, the cylindrical part 22 it is prevented from a rotational movement relative to the valve body 2.

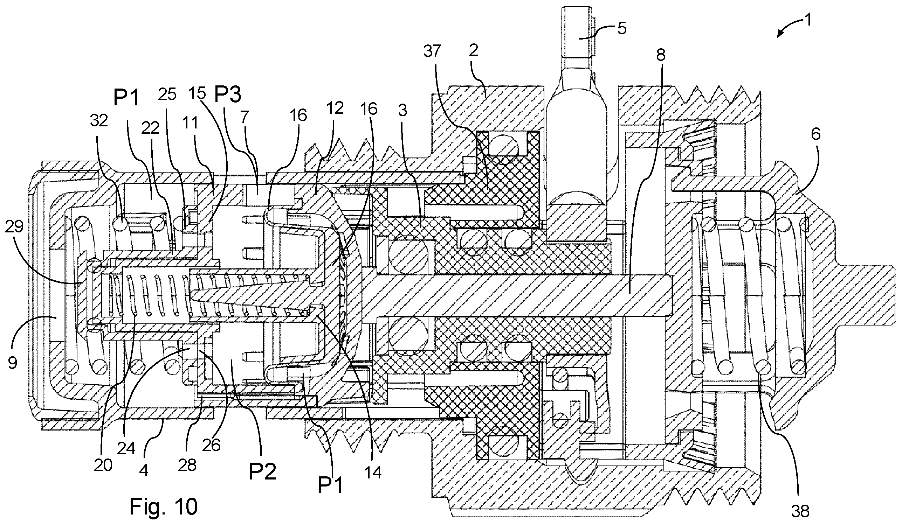

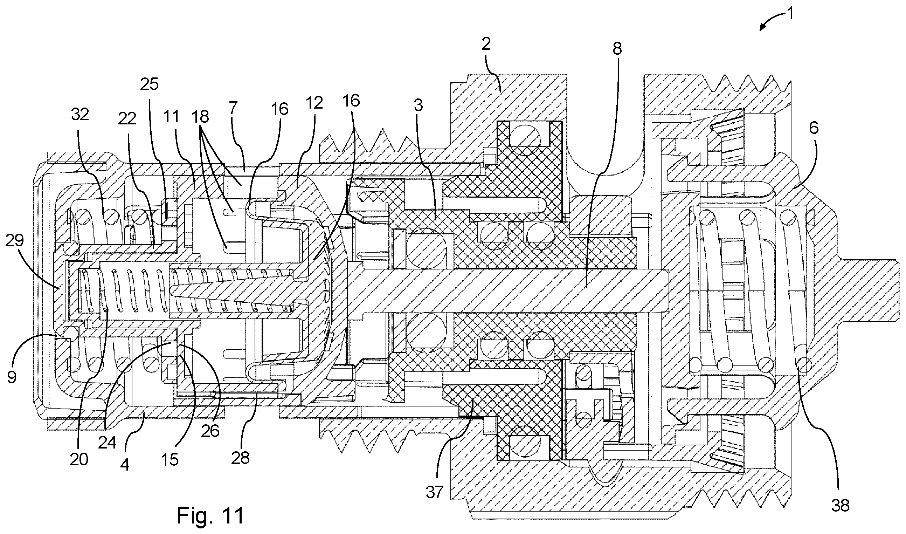

Thus, the annular body 11 and the cylindrical part 22 form together an axially movable unit 10. Figs. 7 and 8 show the unit 10 in detail. Fig. 10 shows the axially movable unit 10 in a position where the closing member 29 does not close the axial inlet opening 9 and Fig. 11 shows the axially movable unit 10 in a position where the closing member 29 sealingly closes the inlet opening 9. Thus, in the position shown in Fig. 11 the control valve is completely closed and does not have any leakage.

The unit 10 is biased to the open position by a helical spring 32. The unit 10 can be moved against the bias of the helical spring 32 by applying force to the activator 6 (e.g. by using an actuator). The force of the activator 6 is transmitted to the cover 12 of the unit 10 by a central shaft 8. The central shaft 8 is sealed by an O-ring against an insert 37.

The cylindrical part 22 supports a plate member 25. The plate member 25 is urged onto the disc member 15 by the helical spring 32. Thus, the side furthest from the inlet opening 9 of the plate member 25 is pressed onto the side closest to the inlet opening 9 of the disc shaped member 15. The plate member 25 is provided with at least one second regulation opening 24 for interacting with the first regulation opening 26. One side of the plate member 25 is in contact with the side of said disk shaped element 25 closest to said inlet opening 9. The plate element 25 is arranged to move axially in unison with the annular body 11 and the plate element 25 is rotationally immovable relative to the cylindrical portion 4 of the valve body 2.

Rotation of the annular body eleven relative to the valve body 2 and thus relative to the plate member 25 establishes a greater or smaller overlap between the at least one first regulation opening 26 and the at least one second regulation opening 24.

Thus, greater or smaller overlap may be established between the at least one first regulation opening 26 and the at least one second regulation opening 24 by the rotation of the annular body 11 relative to the valve body 2. The size of the overlap can be used to determine the flow area of the adjustable opening through which the liquid that flows through the control valve one needs to pass. The differential pressure regulation function ensures that the pressure differential over the adjustable size opening is constant, thereby allowing very precise control of the flow.

Fig. 10 illustrates the areas in the valve where the first pressure P1 resides and the area in the valve where the second pressure P2 resides. Pressure P1 resides in the inlet area of the control valve. Pressure P2 is established through a pressure drop over the adjustable size opening and acts on the same side of the rolling diaphragm 16 as the helical spring 20. Pressure P3 is the pressure at the outlet 7 of the control valve 1 and is established by a pressure drop from the second pressure P2 over the exit openings 18. The threat for coupling the control valve 1 shown in Figs. 10 to 15 to an actuator is than external threat, whereas the threat for coupling the control valve 1 shown in Figs. 1 to 9 is an internal threat. Both types of threat and other coupling means can be used interchangeably for coupling actuator to the control valve 1.

Pressure P1 needs to be communicated to the side of the rolling diaphragm 16 furthest from the axial inlet opening 9. At least one pressure communication channel 28 is provided in the annular body 11 for communicating the first pressure P1 from a position on the axial extremity of the annular body 11 closest to the longitudinal end of the control valve 1 with the inlet opening 9 to a position on the other side of the rolling diaphragm 16. Hereto, at least one pressure communication channel 28 extends substantially axially through the annular body 11. In an embodiment, a pressure communication channel 28 extends axially between two axially extending exit openings 18. The at least one pressure communication channel 28 opens to the axial extremity of the annular body 11 closest to the inlet opening 9, i.e. to the chamber with the first pressure P1.

Thus, liquid can flow from the chamber with the first pressure P1 in the cylindrical portion 4 and from there into the pressure communication channels 28, regardless of the relative rotational position between the plate member 25 and the annular body 11 and via the communication channel 28 to the opposite side of the rolling diaphragm 16, without the need for any opening in the rolling diaphragm 16. Thus, the rolling diaphragm 16 can be made from a single piece of material without any through going hole in it.

A handle 5 for manual adjustment of the rotational position of the annular body 11 protrudes through a circumferentially extending slot in the valve body 2. The handle 5 engages an interconnecting cylindrical member 3 that is arranged to rotatably move relative to the valve body 2. The interconnecting cylindrical member 3 is sealed against an insert 37 by means of O-rings. The insert 37 is statically disposed in the valve body 2 and sealed against the valve body 2 by an O-ring. The insert 37 is provided with a central bore through which the interconnecting cylindrical member 3 passes with a sealing fit provided by O-rings. This allows the interconnecting cylindrical member 3 to move rotationally relative to the valve body 2 in a sealing manner. The interconnecting cylindrical member 3 is connected to a cover 12 of the annular body 11. The cover 12 is rigidly connected to the annular body 11. Rotational movement of the handle 5 is transmitted to the annular body 11 via the interconnecting cylindrical member 3 and the cover 12. The position of the handle 5 is secured against unintentional change of position by a locking member 34.

The central shaft 8 extends through a central bore in the interconnecting cylindric member 3. The central shaft 8 extends axially between the activator 6 and the cover 12 and thus transmits axial force from the activator to the annular body 11. This axial force, that can originate form an electric or other type actuator urges the annular body 11 axially in the direction of the axial inlet opening 9 against the action of the helical spring 32. When sufficient axial force is applied to the activator 6, the annular body 11 together with the cylindrical part 22 with its closing member 29 are pushed towards the axial inlet opening 9 until the closing member 9 engages the inlet opening, thereby closing the inlet opening sealingly. This closed position of the control valve 1 is illustrated in Fig 11. The open position of the control valve 1 where no force is applied to the activator 6 is shown in Fig. 10. The actuator can therefore be a simple "on/off" type linear actuator that either applies a force or does not, although a more sophisticated type of linear actuator that can be commanded to move to a desired position can also be used.

When the control valve 1 is open, the size of the adjustable size opening is adjusted by rotation of the annular body 11 relative to the valve body 2 and thus relative to the plate member 25 so that the overlap between the first regulation opening 26 and the second regulation opening 24 changes.

The pressure drop from the first (inlet) pressure P1 to the second (intermediate) pressure P2 is kept constant by the rolling diaphragm 16 that finds its position under the balance of the pressures and the spring force acting on the rolling diaphragm 16. The flow though the exit openings 18 is restricted to a degree depending on the position of the rolling diaphragm 16 and causes the pressure drop from the second (intermediate) pressure P2 to the third (outlet) pressure P3.

The control valve 1 is suitable for use in a manifold 40, such as for example a manifold for a floor heating system. Hereto, the control valve 1 is installed in the manifold using the outer thread on the valve body 2 that engages corresponding thread in the manifold 40. The manifold 40 is preferably provided with fittings 42 that engage the longitudinal end of the valve body 2 with the axial inlet opening 9. Thus, the supply of the first pressure P1 can take place through a manifold 42.

In the shown embodiments, the rotational position of the annular body 11 is adjusted manually using the handle 5. However, the rotational position of the annular body 11 may in not shown embodiments be adjusted by an actuator or the like, e.g. under control from an electronic control unit.

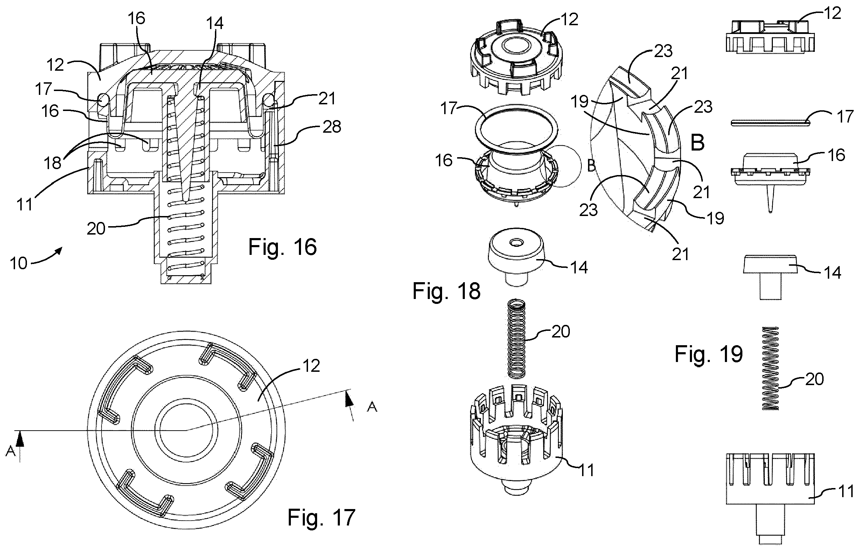

Figs. 16 to 19 illustrate another embodiment of the functional element 10 that is used in the control valve 1. The functional element 10 of this embodiment essentially identical to the functional element 10 described with reference to Figs. 1 to 15, except for the following features. The circumferential edge of the rolling diaphragm 16 is not provided with a ridge that seals against the cover 12. Instead, the annular body 11 is provided with a rim 19 that is interrupted by recesses 21 for allowing passage of liquid. The axial side of the rim is provided with a groove 23 in which an O-ring 17 is partially received for supporting the O-ring 17. The O-ring 17 seals against the cover 12. The pressure communication conduit 28 passes on the radially outer side of the (outer) circumference of the rolling diaphragm 16 and connects to the recesses 21 to thereby establish fluid communication to the opposite side of the rolling diaphragm (opposite to the pressure chamber P1). In an embodiment the number of recesses 21 corresponds to the number of pressure communication conduits 28. In an embodiment, the recesses 21 are distributed over the circumference of the ring 19, and preferably equally spaced.

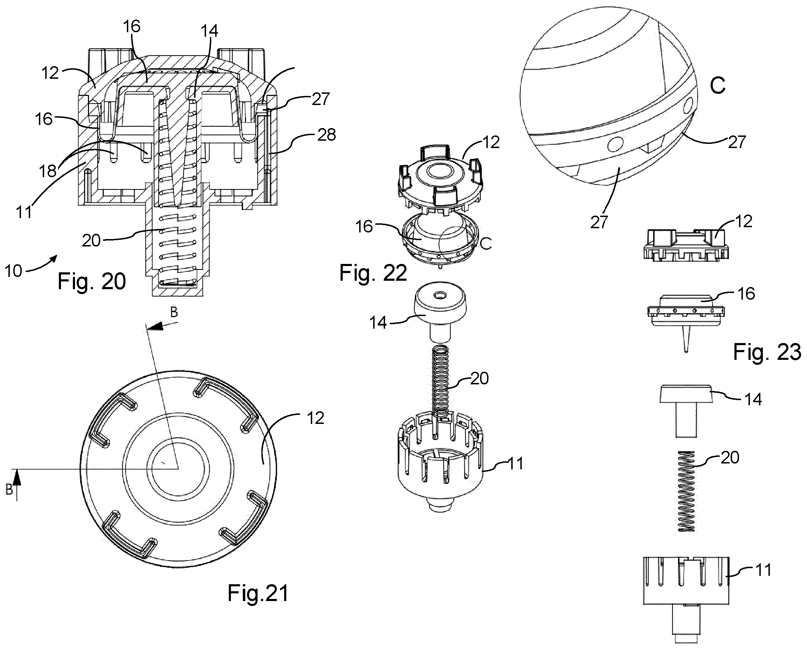

Figs. 20 to 23 illustrate yet another embodiment of the functional element 10 that is used in the control valve 1. The functional element 10 of this embodiment essentially identical to the functional element 10 described with reference to Figs. 1 to 15, except for the following features. The circumferential edge of the rolling diaphragm 16 is provided with a ridge 30 that seals against the cover 12. The ridge 30 is provided with apertures 27 that connect to the pressure communication conduit 28. The ridge 30 seals against the cover 12. The pressure communication conduits 28 passes that on the radially outer side of the (outer) circumference of the rolling diaphragm 16 and of the ridge 30 and connects to the apertures 30 to thereby establish fluid communication to the opposite side of the rolling diaphragm (opposite to the pressure chamber P1). Also, in this embodiment, the (outer) circumference of the rolling diaphragm 16 is along all of its length secured to an edge of the annular body 11 and the rolling diaphragm 16 itself does not have any through going openings that could cause leakage. Only the ridge 30 is provided with apertures, but this ridge is provided on the circumference of the rolling diaphragm 16 with the apertures only going through the ridge 30. In an embodiment, the number of apertures 27 is equal to the number of pressure communication conduit 28. In an embodiment, the apertures 27 distributed over the circumference of the ridge 30, and preferably equally spaced.

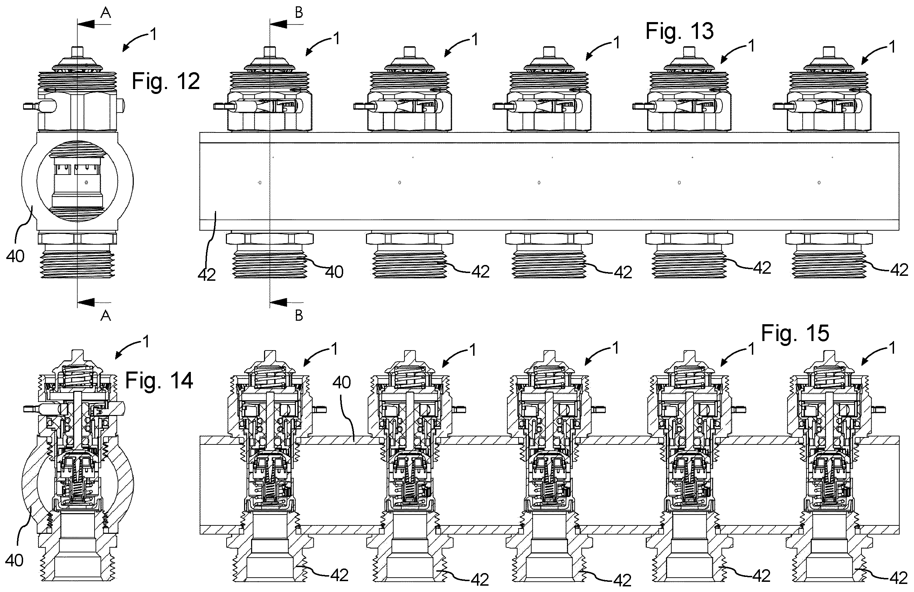

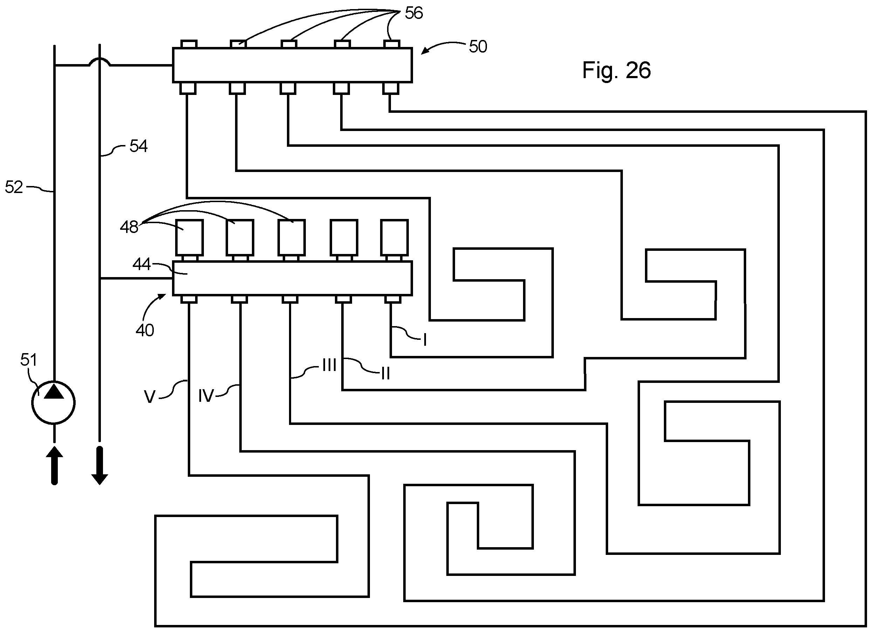

A manifold 40 for e.g. a floor heating system is described with reference to Figs. 12 to 15 and 24 and 25. A floor heating system comprising the manifold 40 is described with reference to Fig. 26. A control valve 1 for use in the manifold 40 is described above.

The manifold 40 is configured to be connected to control the flow of a floor heating system with a plurality of circuits I,II,III,IV,V. The manifold 40 has an elongated tubular housing 44, of conventional material and has a hollow interior.

Either of the longitudinal ends of the housing 44 functions as an outlet 43 (outlet opening) with the opposite longitudinal end being closed by a plug (not shown).

The housing 44 is provided with plurality of sockets 42 for connection to respective return lines of circuits I,II,III,IV,V of the floor heating system.

The sockets 42 are provided with a lumen through which liquid (e.g. water) can flow through the socket 42 from one end to the other. The sockets 42 are provided with external thread or alternatively internal thread for engaging the coupling means for coupling the socket 42 to the return lines of the circuits. The socket 42 is also be provided with external thread for engaging a threaded hole in the housing 44 to install the socket 42 sealingly in the housing 44. However, it is understood that other conventional ways of securing the socket 42 in the housing 44 could be used.

When installed in the housing 44 the socket 42 extends through a wall of the housing 44 and protrudes into the hollow interior of the housing 44.

The end of the socket 42 that protrudes into the housing 44 is configured to sealingly engage a first longitudinal end of a control valve 1.

The manifold 40 is provided with a plurality of flow control valves 1, with the number of control valves corresponding to the number of circuits of the floor heating system. Thus, each flow control valve 1 is associated with one of the sockets 42.

Each of the flow control valves 1 has an elongated body 2, with a first longitudinal end that sealingly engages a socket 42 and a second longitudinal end for coupling to an actuator 48.

The flow control valves 1 are provided with an inlet 9 in fluidic connection with the socket 42 associated with the flow control valve 1 concerned, and at least one outlet 7 in fluidic connection with the manifold outlet 43.

The flow control valves 1 are also provided with a pressure regulating arrangement configured for maintaining a substantially constant differential pressure between a first pressure P1 in the control valve 1 and a second pressure P2 in the control valve 1. The control valves 1 are provided with an axial inlet opening 9 at their first axial end. The axial inlet opening 9 is in fluidic communication with the lumen in the socket 42. The control valves 1 are also provided with at least one outlet opening 7 that is in fluidic communication with the interior of the tubular housing 44.

The control valves 1 comprise a flow area regulator for regulating a flow area of at least one variable size entry opening through which the liquid flowing through the control valve 1 from the inlet opening 9 to the outlet opening 7 must pass. The arrangement for maintaining a constant differential pressure maintains a constant differential pressure over the adjustable size opening.

A portion of the control valve 1 protrudes into the tubular housing 44 through an opening in the tubular body 44. The opening through which the control valve projects 1 is arranged directly opposite to a socket 42. A portion of a socket 42 projects through an opening in the tubular housing 44 to the first longitudinal of the control valve 1.

In an embodiment shown in Figs. 12 to 15 the first longitudinal end of the control valve 1 abuts sealingly with the end of the socket 42 that projects into the housing 44. Hereto, the first longitudinal end of the control valve 1 is flat so that it matches the flat end of the socket 42. The axial inlet opening 9 is arranged centrally in the flat end of the control valve 1. In this embodiment, the control valve 1 is provided with external threat that engages a threaded hole in the tubular housing 44.

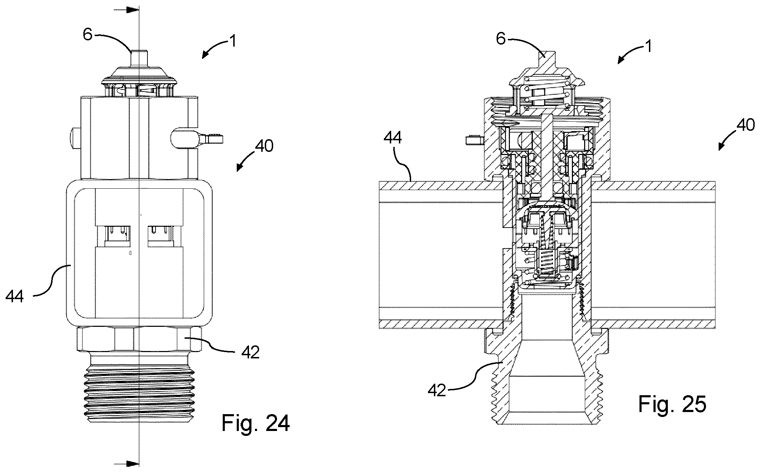

In embodiment shown in Figs. 24 and 25, the first longitudinal end of the control valve 1 is provided with thread and the portion of the socket 42 that projects into the tubular housing 44 is provided with matching thread and the control valve 1 is in threaded connection with the socket 42. The first longitudinal end of the control valve 1 may be provided with internal thread and the portion of the socket 42 protruding into the tubular housing 44 may be provided with external thread. However, the threaded arrangement may also be applied vice versa with the internal thread on the socket and the external thread on the first longitudinal end of the control valve 1.

The second longitudinal end of the control valve 1 protrudes from the tubular body 44. An activator 6 protrudes from the valve body 2 at the second longitudinal end of the control valve 1. The second longitudinal end is provided with coupling means, such as e.g. thread for coupling to thread of an actuator 48, such as e.g. a linear actuator 48. The linear actuator 48 is in an embodiment a provided with an electronic control unit that is configured to operate the control valve 1 in accordance with the flow characteristics of the control valve 1. However, also a simple on/off type actuator 48 can be used for controlling the position of the control valve 1.

The floor heating system comprises a manifold 40 connected to the return end of a plurality of individual floor heating circuits I,II,III,IV. The floor heating system further comprises a feed conduit 52 and a return conduit 54. The outlet 43 of the manifold 40 is connected to the return conduit 54

The inlet ends of the plurality of individual floor heating circuits I,II,III,IV are connected to a second manifold 50. An inlet of the second manifold 50 is connected to the feed conduit 52. The second manifold 50 is provided with units 56, which units 56 can either be simple plugs, flow indicators or simple manually operated on off valves.

The feed conduit 52 is provided with a feed pump 51 and the feed conduit 52 and return conduit 54 are connected to a heating unit or to cooling equipment.

The various aspects and implementations have been described in conjunction with various embodiments herein. However, other variations to the disclosed embodiments can be understood and effected by those skilled in the art in practicing the invention defined in the claims, from a study of the drawings and the specification. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The reference signs used in the claims shall not be construed as limiting the scope.

## Claims

1. A control valve (1) for controlling flow of liquid in a heating and/or cooling installation, said control valve (1) comprising:
an elongated, preferably rotation symmetric, valve body (2) with opposite first- and second longitudinal ends, said first longitudinal end being provided with an inlet opening (9),
a pressure regulating arrangement configured for maintaining a substantially constant differential pressure between a first pressure (P1) in said control valve (1) and a second pressure (P2) in said control valve (1),
said pressure regulating arrangement comprises a movable throttle member (16) that is urged by said first pressure (P1) to increase the flow resistance posed by the pressure regulating arrangement and that is urged by a resilient member (20) and by said second pressure (P2) to decrease the flow resistance posed by the pressure regulating arrangement,
the movable throttle member comprising a rolling diaphragm (16) that interacts with a plurality of exit openings (18),
**characterized by** said rolling diaphragm (16) having its outer circular circumference attached to an annular body (11),
said plurality of exit openings (18) being formed radially through said annular body (11), and
said annular body (11) being slidably disposed in a cylindrical portion (4) of said valve housing (2) for allowing axial movement and rotational movement of said annular body (11) relative to said elongated valve body (2).

2. A control valve (1) according to claim 1, wherein said annular body (11) fits sealingly inside said cylindrical portion (4).

3. A control valve (1) according to claim 1 or 2, comprising a closing member (29) arranged to move axially in unison with said annular body (11), said closing member (29) being configured to sealingly close said inlet opening (9) in a first axial portion of said annular body (11) and to allow fluid passage through said inlet opening (9) in a second axial position of said annular body (11).

4. A control valve (1) according to claim 3, wherein said closing member (29) comprises a cylindrical part (22) extending axially from said annular body (11) towards said inlet opening (9).

5. A control valve (1) according to any one of claims 1 to 4, said annular body (11) having two opposite axial ends, wherein the axial end of said annular body (11) closest to inlet opening (9) comprises a disk-shaped element (15) provided with at least one first regulation opening (26).

6. A control valve (1) according to claim 5, wherein said disk shaped element (15) forms a bottom of said annular body (11).

7. A control valve (1) according to claim 5 or 6, comprising a plate member (25) with at least one second regulation opening (24) for interacting with said first regulation opening (26), one side of said plate member (25) being in contact with the side of said disk shaped element (25) closest to said inlet opening (9), said plate member (25) being arranged to move axially in unison with said annular body (11) and said plate member (25) being rotationally immovable relative to the cylindrical portion (4) of said elongated valve body (2), whereby a greater or smaller overlap may be established between said at least one first regulation opening (26) and said at least one second regulation opening (24) by the rotation of said annular body (11) relative to said elongated valve body (2).

8. A control valve (1) according to claim 6 or 7, wherein said cylindrical portion (22) is connected to said plate member (25).

9. A control valve (1) according to any one of claims 1 to 8, comprising a membrane support member (14) for supporting and engaging a central portion of said rolling membrane (16), and a helical spring (20), said helical spring (20) acting on said support member (14) to urge said rolling membrane (16) in a direction that reduces the throttling effect of said rolling membrane (16).

10. A control valve (1) according to any one of claims 1 to 9, comprising a mechanism connected to said annular body (11) for adjusting the rotational position of said annular body (11) relative to said elongated valve body (2), said mechanism being configured for adjusting said rotational position manually or with an actuator.

11. A control valve (1) according to any one of claims 1 to 10, comprising mechanism connected to said annular body (11) for adjusting the axial position of said annular body (11) relative to said elongated valve body (2), said mechanism being configured for adjusting said axial position manually or with an actuator.

12. A control valve (1) according to any one of claims 1 to 11, wherein said annular body (11) comprises least one pressure communication channel (28) extending in said annular body (11) for communicating said first pressure (P1) from a first location in the control valve (1) on one axial side of said rolling diaphragm (16) to a second location in the control valve (1) on the other axial side of said rolling diaphragm (16).

13. A manifold (40) for a floor heating system with a plurality of circuits (I,II,III,IV,V), said manifold (40) comprising an elongated tubular housing (44), said tubular housing (44) being provided with:
a manifold outlet (43),
a plurality of sockets (42) for connection to respective return lines of circuits (I,II,III,IV,V) of the floor heating system,
said sockets (42) having a lumen and being arranged to extend into the manifold (40) through a wall of said tubular housing (44), and
a plurality of flow control valves (1), each flow control valve (1) being associated with one of said sockets (42),
**characterized by** said flow control valves (1) comprising:
an elongated valve body (2), said elongated valve body (2) having a first longitudinal end that extends into the manifold for sealingly engaging one of said sockets (42) and a second longitudinal end that extents outside said manifold (40) for coupling to an actuator (48),
an inlet (9) in fluidic connection with the socket (42) associated with the flow control valve (1) concerned,
at least one outlet (7) in fluidic connection with said manifold outlet (43), and
a pressure regulating arrangement in said elongated valve body (2), said pressure regulating arrangement being configured for maintaining a substantially constant differential pressure between a first pressure (P1) in said control valve (1) and a second pressure (P2) in said control valve (1).

14. A manifold (40) according to claim 13, wherein said flow control valves (1) are flow control valves according to any one of claims 1 to 12.

15. A floor heating system comprising a manifold (40) according to claim 13 or 14, said manifold being connected to the return end of a plurality of individual floor heating circuits (I,II,III,IV).

## Patentansprüche

1. Steuerventil (1) zum Steuern eines Flüssigkeitsstroms in einer Heiz- und/oder Kühlanlage, das Steuerventil (1) umfassend:
einen länglichen, vorzugsweise rotationssymmetrischen Ventilkörper (2) mit gegenüberliegenden ersten und zweiten Längsenden, wobei das erste Längsende mit einer Einlassöffnung (9) versehen ist,
eine Druckregulierungsanordnung, die konfiguriert ist, um einen im Wesentlichen konstanten Differenzdruck zwischen einem ersten Druck (P1) in dem Steuerventil (1) und einem zweiten Druck (P2) in dem Steuerventil (1) aufrechtzuerhalten, wobei die Druckregulierungsanordnung ein bewegliches Drosselelement (16) umfasst, das durch den ersten Druck (P1) gezwungen wird, um den von der Druckregulierungsanordnung auferlegten Strömungswiderstand zu erhöhen, und das durch ein elastisches Element (20) und durch den zweiten Druck (P2) gezwungen wird, um den von der Druckregulierungsanordnung auferlegten Strömungswiderstand zu verringern,
das bewegliche Drosselelement umfassend eine Rollmembran (16) umfasst, die mit einer Vielzahl von Austrittsöffnungen (18) zusammenwirkt,
**dadurch gekennzeichnet, dass** der äußere kreisförmige Umfang der Rollmembran (16) an einem ringförmigen Körper (11) angebracht ist,
wobei die Vielzahl von Austrittsöffnungen (18) radial durch den ringförmigen Körper (11) gebildet ist, und
wobei der ringförmige Körper (11) verschiebbar in einem zylindrischen Abschnitt (4) des Ventilgehäuses (2) angeordnet ist, um eine axiale Bewegung und Drehbewegung des ringförmigen Körpers (11) in Bezug auf den länglichen Ventilkörper (2) zu ermöglichen.

2. Steuerventil (1) nach Anspruch 1, wobei der ringförmige Körper (11) dichtend in den zylindrischen Abschnitt (4) passt.

3. Steuerventil (1) nach Anspruch 1 oder 2, umfassend ein Schließelement (29), das angeordnet ist, um sich gemeinsam mit dem ringförmigen Körper (11) axial zu bewegen, wobei das Schließelement (29) konfiguriert ist, um die Einlassöffnung (9) in einem ersten axialen Abschnitt des ringförmigen Körpers (11) dichtend zu schließen und in einer zweiten axialen Position des ringförmigen Körpers (11) einen Fluiddurchgang durch die Einlassöffnung (9) zu ermöglichen.

4. Steuerventil (1) nach Anspruch 3, wobei das Schließelement (29) einen zylindrischen Teil (22) umfasst, der sich axial von dem ringförmigen Körper (11) zu der Einlassöffnung (9) erstreckt.

5. Steuerventil (1) nach einem der Ansprüche 1 bis 4, wobei der ringförmige Körper (11) zwei gegenüberliegende axiale Enden aufweist, wobei das axiale Ende des ringförmigen Körpers (11), das der Einlassöffnung (9) am nächsten ist, ein scheibenförmiges Element (15) umfasst, das mit mindestens einer ersten Regulierungsöffnung (26) versehen ist.

6. Steuerventil (1) nach Anspruch 5, wobei das scheibenförmige Element (15) einen Boden des ringförmigen Körpers (11) bildet.

7. Steuerventil (1) nach Anspruch 5 oder 6, umfassend ein Plattenelement (25) mit mindestens einer zweiten Regulierungsöffnung (24) zum Zusammenwirken mit der ersten Regulierungsöffnung (26), wobei eine Seite des Plattenelements (25) in Kontakt mit der Seite des scheibenförmigen Elements (25) ist, die der Einlassöffnung (9) am nächsten ist, das Plattenelement (25) angeordnet ist, um sich axial gemeinsam mit dem ringförmigen Körper (11) zu bewegen, und das Plattenelement (25) in Bezug auf den zylindrischen Abschnitt (4) des länglichen Ventilkörpers (2) drehfest ist, wodurch durch die Drehung des ringförmigen Körpers (11) in Bezug auf den länglichen Ventilkörper (2) eine größere oder kleinere Überlappung zwischen der mindestens einen ersten Regulierungsöffnung (26) und der mindestens einen zweiten Regulierungsöffnung (24) hergestellt werden kann.

8. Steuerventil (1) nach Anspruch 6 oder 7, wobei der zylindrische Abschnitt (22) mit dem Plattenelement (25) verbunden ist.

9. Steuerventil (1) nach einem der Ansprüche 1 bis 8, umfassend ein Membranhalterungselement (14) zum Halten und Eingreifen in einen mittleren Abschnitt der Rollmembran (16), und eine Schraubenfeder (20), wobei die Schraubenfeder (20) auf das Halterungselement (14) wirkt, um die Rollmembran (16) in eine Richtung zu zwingen, die die Drosselwirkung der Rollmembran (16) reduziert.

10. Steuerventil (1) nach einem der Ansprüche 1 bis 9, umfassend einen Mechanismus, der zum Einstellen der Drehposition des ringförmigen Körpers (11) in Bezug auf den länglichen Ventilkörper (2) mit dem ringförmigen Körper (11) verbunden ist, wobei der Mechanismus zum Einstellen der Drehposition von Hand oder mit einem Aktor konfiguriert ist.

11. Steuerventil (1) nach einem der Ansprüche 1 bis 10, umfassend einen Mechanismus, der zum Einstellen der axialen Position des ringförmigen Körpers (11) in Bezug auf den länglichen Ventilkörper (2) mit dem ringförmigen Körper (11) verbunden ist, wobei der Mechanismus zum Einstellen der axialen Position von Hand oder mit einem Aktor konfiguriert ist.

12. Steuerventil (1) nach einem der Ansprüche 1 bis 11, wobei der ringförmige Körper (11) mindestens einen Druckverbindungskanal (28) umfasst, der sich in dem ringförmigen Körper (11) erstreckt, um den ersten Druck (P1) von einer ersten Stelle in dem Steuerventil (1) auf einer axialen Seite der Rollmembran (16) zu einer zweiten Stelle in dem Steuerventil (1) auf der anderen axialen Seite der Rollmembran (16) zu verbinden.

13. Verteiler (40) für ein Fußbodenheizungssystem mit einer Vielzahl von Kreisläufen (I, II, III, IV, V), der Verteiler (40) umfassend ein längliches rohrförmiges Gehäuse (44), wobei das rohrförmige Gehäuse (44) versehen ist mit:
einem Verteilerauslass (43),
einer Vielzahl von Stutzen (42) zum Verbinden mit jeweiligen Rücklaufleitungen von Kreisläufen (I, II, III, IV, V) der Fußbodenheizung,
wobei die Stutzen (42) ein Lumen aufweisen und angeordnet sind, um sich durch eine Wand des rohrförmigen Gehäuses (44) in den Verteiler (40) zu erstrecken, und
eine Vielzahl von Durchflusssteuerventilen (1), wobei jedes Durchflusssteuerventil (1) mit einem der Stutzen (42) assoziiert ist,
**dadurch gekennzeichnet, dass** die Durchflusssteuerventile (1) Folgendes umfassen:
einen länglichen Ventilkörper (2), wobei der längliche Ventilkörper (2) ein erstes Längsende, das sich in den Verteiler zum dichtenden Eingreifen mit einer der Stutzen (42) erstreckt, und ein zweites Längsende, das sich außerhalb des Verteilers (40) zum Koppeln mit einem Aktor (48) erstreckt, aufweist,
einen Einlass (9) in Fluidverbindung mit dem Stutzen (42), der mit dem jeweiligen Durchflusssteuerventil (1) assoziiert ist,
mindestens einen Auslass (7) in Fluidverbindung mit dem Verteilerauslass (43), und
eine Druckregulierungsanordnung in dem länglichen Ventilkörper (2), wobei die Druckregulierungsanordnung konfiguriert ist, um einen im Wesentlichen konstanten Differenzdruck zwischen einem ersten Druck (P1) in dem Steuerventil (1) und einem zweiten Druck (P2) in dem Steuerventil (1) aufrechtzuerhalten.

14. Verteiler (40) nach Anspruch 13, wobei die Durchflusssteuerventile (1) Durchflusssteuerventile nach einem der Ansprüche 1 bis 12 sind.

15. Fußbodenheizungssystem, umfassend einen Verteiler (40) nach Anspruch 13 oder 14, wobei der Verteiler mit dem Rücklaufende einer Vielzahl von einzelnen Fußbodenheizungskreisläufen (I, II, III, IV) verbunden ist.

## Revendications

1. Soupape de commande (1) pour commander l'écoulement de liquide dans une installation de chauffage et/ou de refroidissement, ladite soupape de commande (1) comprenant :
un corps de soupape allongé, de préférence symétrique en rotation (2) avec des première et seconde extrémités longitudinales opposées, ladite première extrémité longitudinale étant munie d'une ouverture d'entrée (9),
un agencement de régulation de pression configuré pour maintenir une pression différentielle sensiblement constante entre une première pression (P1) dans ladite soupape de commande (1) et une seconde pression (P2) dans ladite soupape de commande (1),
ledit agencement de régulation de pression comprend un élément d'étranglement mobile (16) qui est poussé par ladite première pression (P1) pour augmenter la résistance à l'écoulement provoquée par l'agencement de régulation de pression et qui est poussé par un élément élastique (20) et par ladite seconde pression (P2) pour diminuer la résistance à l'écoulement provoquée par l'agencement de régulation de pression,
l'élément d'étranglement mobile comprenant un diaphragme roulant (16) qui interagit avec une pluralité d'ouvertures de sortie (18),
**caractérisé en ce que** ledit diaphragme roulant (16) a sa circonférence circulaire extérieure attachée à un corps annulaire (11),
ladite pluralité d'ouvertures de sortie (18) étant formées radialement à travers ledit corps annulaire (11), et
ledit corps annulaire (11) étant disposé de manière coulissante dans une partie cylindrique (4) dudit logement de soupape (2) pour permettre un mouvement axial et un mouvement de rotation dudit corps annulaire (11) par rapport audit corps de soupape allongé (2).

2. Soupape de commande (1) selon la revendication 1, dans laquelle ledit corps annulaire (11) s'adapte de manière étanche à l'intérieur de ladite partie cylindrique (4).

3. Soupape de commande (1) selon la revendication 1 ou 2, comprenant un élément de fermeture (29) disposé pour se déplacer axialement à l'unisson avec ledit corps annulaire (11), ledit élément de fermeture (29) étant configuré pour fermer de manière étanche ladite ouverture d'entrée (9) dans une première partie axiale dudit corps annulaire (11) et pour permettre le passage de fluide à travers ladite ouverture d'entrée (9) dans une seconde position axiale dudit corps annulaire (11).

4. Soupape de commande (1) selon la revendication 3, dans laquelle ledit élément de fermeture (29) comprend une partie cylindrique (22) s'étendant axialement depuis ledit corps annulaire (11) vers ladite ouverture d'entrée (9).

5. Soupape de commande (1) selon l'une quelconque des revendications 1 à 4, ledit corps annulaire (11) ayant deux extrémités axiales opposées, dans laquelle l'extrémité axiale dudit corps annulaire (11) la plus proche de l'ouverture d'entrée (9) comprend un élément en forme de disque (15) muni d'au moins une première ouverture de régulation (26).

6. Soupape de commande (1) selon la revendication 5, dans laquelle ledit élément en forme de disque (15) forme un fond dudit corps annulaire (11).

7. Soupape de commande (1) selon la revendication 5 ou 6, comprenant un élément de plaque (25) avec au moins une seconde ouverture de régulation (24) pour interagir avec ladite première ouverture de régulation (26), un côté dudit élément de plaque (25) étant en contact avec le côté dudit élément en forme de disque (25) le plus proche de ladite ouverture d'entrée (9), ledit élément de plaque (25) étant disposé pour se déplacer axialement à l'unisson avec ledit corps annulaire (11) et ledit élément de plaque (25) étant immobile en rotation par rapport à la partie cylindrique (4) dudit corps de soupape allongé (2), moyennant quoi un chevauchement plus ou moins important peut être établi entre ladite au moins une première ouverture de régulation (26) et ladite au moins une seconde ouverture de régulation (24) par la rotation dudit corps annulaire (11) par rapport audit corps de soupape allongé (2).

8. Soupape de commande (1) selon la revendication 6 ou 7, dans laquelle ladite partie cylindrique (22) est reliée audit élément de plaque (25).

9. Soupape de commande (1) selon l'une quelconque des revendications 1 à 8, comprenant un élément de support de membrane (14) pour supporter et engager une partie centrale dudit diaphragme roulant (16), et un ressort hélicoïdal (20), ledit ressort hélicoïdal (20) agissant sur ledit élément de support (14) pour pousser ledit diaphragme roulant (16) dans une direction qui réduit l'effet d'étranglement dudit diaphragme roulant (16).

10. Soupape de commande (1) selon l'une quelconque des revendications 1 à 9, comprenant un mécanisme relié audit corps annulaire (11) pour régler la position de rotation dudit corps annulaire (11) par rapport audit corps de soupape allongé (2), ledit mécanisme étant configuré pour régler ladite position de rotation manuellement ou avec un actionneur.

11. Soupape de commande (1) selon l'une quelconque des revendications 1 à 10, comprenant un mécanisme relié audit corps annulaire (11) pour régler la position axiale dudit corps annulaire (11) par rapport audit corps de soupape allongé (2), ledit mécanisme étant configuré pour régler ladite position axiale manuellement ou avec un actionneur.

12. Soupape de commande (1) selon l'une quelconque des revendications 1 à 11, dans laquelle ledit corps annulaire (11) comprend au moins un canal de communication de pression (28) s'étendant dans ledit corps annulaire (11) pour communiquer ladite première pression (P1) d'un premier emplacement dans la soupape de commande (1) sur un côté axial dudit diaphragme roulant (16) à un second emplacement dans la soupape de commande (1) sur l'autre côté axial dudit diaphragme roulant (16).

13. Collecteur (40) pour un système de chauffage de sol avec une pluralité de circuits (I, II, III, IV, V), ledit collecteur (40) comprenant un boîtier tubulaire allongé (44), ledit boîtier tubulaire (44) étant pourvu de :
une sortie de collecteur (43),
une pluralité de prises (42) pour la connexion aux conduites de retour respectives de circuits (I, II, III, IV, V) du système de chauffage de sol,
lesdites prises (42) ayant une lumière et étant disposées pour s'étendre dans le collecteur (40) à travers une paroi dudit boîtier tubulaire (44), et
une pluralité de soupapes de régulation de débit (1), chaque soupape de régulation de débit (1) étant associée à l'une desdites prises (42),
**caractérisé en ce que** lesdites soupapes de régulation de débit (1) comprennent :
un corps de soupape allongé (2), ledit corps de soupape allongé (2) ayant une première extrémité longitudinale qui s'étend dans le collecteur pour venir en prise de manière étanche avec l'une desdites prises (42) et une seconde extrémité longitudinale qui s'étend à l'extérieur dudit collecteur (40) pour se coupler à un actionneur (48),
une entrée (9) en connexion fluidique avec la prise (42) associée à la soupape de régulation de débit (1) concernée, au moins une sortie (7) en connexion fluidique avec ladite sortie de collecteur (43), et
un agencement de régulation de pression dans ledit corps de soupape allongé (2), ledit agencement de régulation de pression étant configuré pour maintenir une pression différentielle sensiblement constante entre une première pression (P1) dans ladite soupape de commande (1) et une seconde pression (P2) dans ladite soupape de commande (1).

14. Collecteur (40) selon la revendication 13, dans lequel lesdites soupapes de régulation de débit (1) sont des soupapes de régulation de débit selon l'une quelconque des revendications 1 à 12.

15. Système de chauffage de sol comprenant un collecteur (40) selon la revendication 13 ou 14, ledit collecteur étant relié à l'extrémité de retour d'une pluralité de circuits de chauffage de sol individuels (I, II, III, IV).
